Europäisches Patentamt

European Patent Office

Office européen des brevets

(11) Publication number: **0 055 142**
**B1**

## EUROPEAN PATENT SPECIFICATION

(45) Date of publication of patent specification: **17.04.85**

(51) Int. Cl.⁴: **B 23 B 51/02, B 23 B 51/08**

(21) Application number: **81306115.7**

(22) Date of filing: **23.12.81**

(54) Router bit.

(30) Priority: **24.12.80 JP 183174/80**
**24.12.80 JP 183175/80**

(43) Date of publication of application:
**30.06.82 Bulletin 82/26**

(45) Publication of the grant of the patent:
**17.04.85 Bulletin 85/16**

(84) Designated Contracting States:
**DE FR GB IT NL**

(56) References cited:
**CH-A- 122 122**
**GB-A-2 058 616**
**GB-A-2 067 440**
**US-A-2 101 583**

(73) Proprietor: **FUJI JUKOGYO KABUSHIKI KAISHA**
**7-2 Nishishinjuku 1-chome Shinjuku-ku**
**Tokyo (JP)**

(72) Inventor: **Suzuki, Takashi**
**4-4-32 Miyahara**
**Utsunomiya-shi Tochigi-Pref (JP)**
Inventor: **Fukuda, Ryohei**
**708-3 Makudamachi**
**Utsunomiya-shi Tochigi-Pref (JP)**
Inventor: **Takahashi, Kouji**
**2-13-11 Midoricho Mibumachi**
**Shimotsuga-gun Tochigi-Pref (JP)**

(74) Representative: **Eyles, Christopher Thomas et al**
**BATCHELLOR, KIRK & EYLES 2 Pear Tree Court**
**Farringdon Road**
**London, EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

The present invention relates to a router bit for cutting the type of composite material made by impregnating resin into laminated cloth made of carbon fibre or Kevlar (trademark).

Since such a composite material is of light weight and high strength, the material is used for making a body of an aircraft or vehicle. The characteristics of the composite material are varied in dependence on kinds of combined materials, treatment, temperature, construction and the like. It is very difficult to cut the composite material.

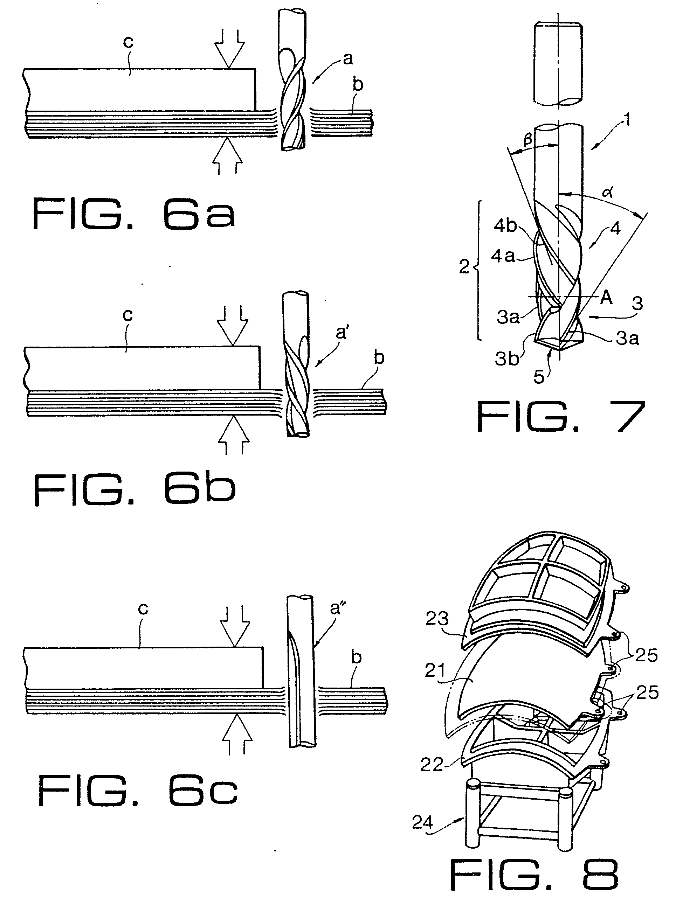

Figure 6a shows a section of material b which is being cut with a right-hand router bit a, Figure 6b shows a section with a left-hand router bit a' and Figure 6c shows a section with a straight fluted bit a". In cutting with the right-hand router bit a, fluff and burrs are left on the surface of the material, and with the left-hand router bit a', fluff and burrs are left on the underside of the material, and with the straight fluted bit a", fluff and burrs are formed on both sides. In addition, a space must be left between the trimming position and the edge of a clamping jig c. Accordingly, the material vibrates about the trimming portion, which causes delamination, decrease of strength and fatigue fracture of the composite material.

The present invention seeks to provide a router bit which can cut a composite material without leaving fluff and burrs on the material.

The present invention also seeks to provide a router bit which is capable of preventing vibration of the material during cutting.

According to the present invention, there is provided a router bit comprising a shank and a fluted portion, the fluted portion comprising at least two upper cutting edges above a predetermined standard point and at least two lower cutting edges below the standard point, the helixes of the upper and lower cutting edges being twisted in mutually opposite directions.

Some embodiments of the present invention will now be described by way of example with reference to the accompanying drawings, in which:

Figure 1 is a side view of a router bit according to the present invention;

Figure 2 is an enlarged sectional view of the router bit taken on line X—X of Figure 1;

Figure 3 is an exploded perspective view illustrating the relation between a composite material and a clamping jig in use;

Figure 4 is a sectional view showing a composite material in the clamped condition;

Figure 5 is a sectional view showing a trimming operation with the router bit of Figure 1;

Figures 6a to 6c show trimming operations with conventional router bits;

Figure 7 is a side view showing another embodiment of the present invention;

Figure 8 is a perspective view illustrating the relation between a composite material and a clamping jig;

Figure 9 is a perspective view showing a part of a clamped piece of material; and

Figure 10 is a sectional view showing a trimming operation with the router bit of Figure 7.

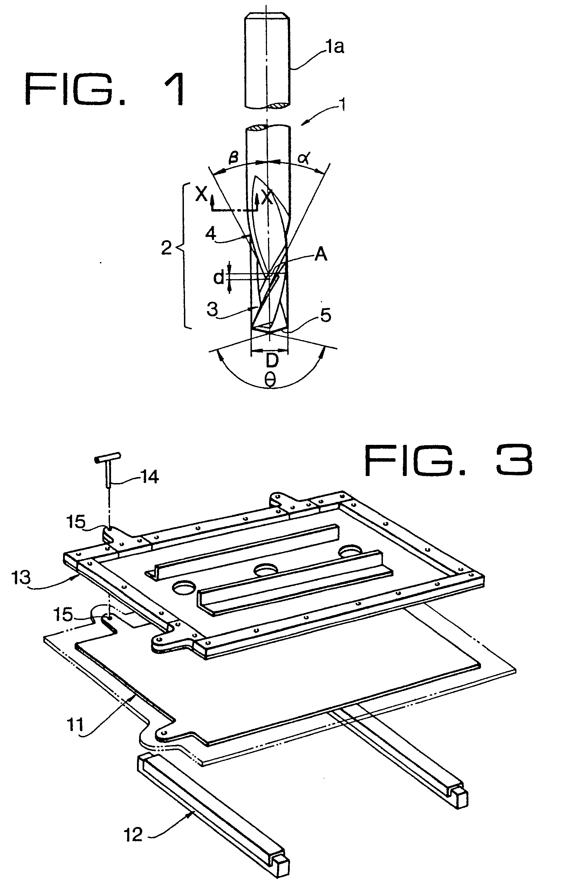

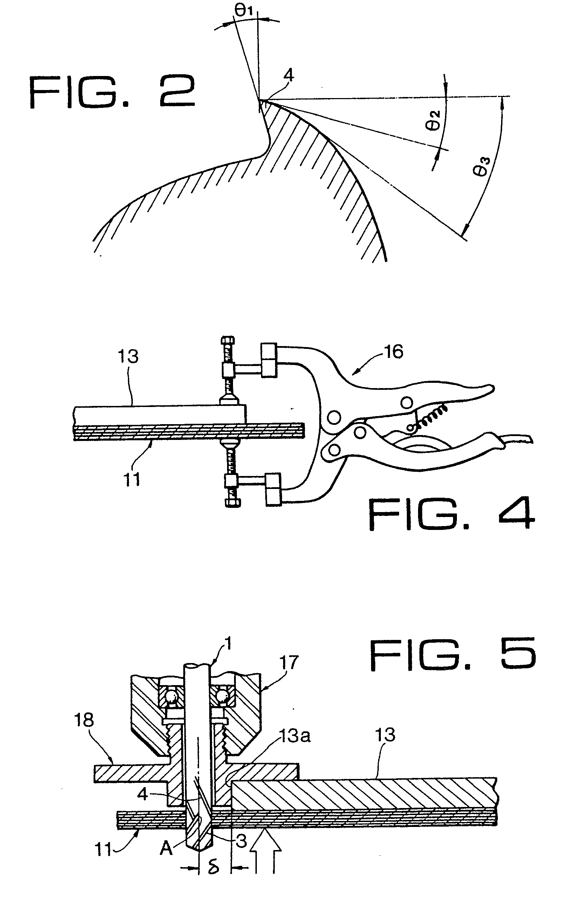

Referring to Figures 1 and 2, reference numeral 1 designates a two-fluted router bit having a shank 1a and a fluted portion 2. The fluted portion 2 comprises an upper fluted portion and a lower fluted portion, with respect to a standard point A. The upper fluted portion comprises upper two cutting edges 4 and the lower fluted portion comprises lower two cutting edges 3. The upper cutting edges 4 are twisted in a counter-clockwise direction and the lower cutting edges 3 are twisted in a clockwise direction. The helix angle $\alpha$ of the lower cutting edge 3 is equal to the helix angle $\beta$ of the upper cutting edge 4. The flute length of the upper portion is equal to that of the lower portion. As shown in Figure 2, each of the cutting edges 3 and 4 has an axial rake angle $\theta 1$ (positive), a primary relief angle $\theta 2$ and a secondary clearance angle $\theta 3$. The cutting edges 3 and 4 overlap each other over a range d at the standard point A. The flutes of both portions overlap each other. On the point of the bit, cutting edges 5 are provided for drilling the material.

In a cutting operation with the router bit with reference to Figures 3 to 5, a plane composite material 11 is positioned on supports 12 and a trimming jig 13 is placed on the composite material 11. At suitable positions of the material 11 and jig 13, a plurality of tooling holes 15 are provided, corresponding holes formed in both members being in alignment with each other. A tooling pin 14 is inserted into corresponding holes 15 and both members are clamped by a clamp 16 as shown in Figure 4.

As shown in Figure 5, the router bit 1 is fixed to a hand router 17 having a profiling stylus 18. The hand router 17 is so disposed that the standard point A is positioned at a location substantially equal to the centre of thickness of the material 11. The hand router 17 is moved along a contour (template) 13a, of the trimming jig 13, so that the composite material is trimmed by the router bit 1.

Since the lower cutting edges 3 are twisted in a clockwise direction and the upper cutting edges 4 are twisted in a counter-clockwise direction, fluff raised by both cutting edges is oriented to the central portion of the width of the material and accurately cut off by cutting edges 3 and 4. Thus, no fluff and burrs are left on either surface of the composite material 11.

Since the helix angles $\alpha$ and $\beta$ of both cutting edges are substantially equal to each other, the force exerted on the material in the upward direction, which is caused by the lower cutting edges 3, and the force in the downward direction caused by the upper cutting edges 4 are balanced. Therefore, the composite material does not vibrate in spite of an offset distance $\delta$. Thus, delamination of the composite material may be prevented.

It is necessary to reduce the overlap range d as much as possible in order to prevent the occurrence of vibration of the material 11. Preferably the length of the overlap range $d$ is less than 1/10 of the bit diameter D. Preferably the helix angle $\alpha$ ($\beta$) is less than 40° in order to obtain a smooth cut face and to prevent vibration of the material. Preferably the axial rake angle $\theta_1$ and primary relief angle $\theta_2$ are between 10° and 20° and the most preferable angle is 15°. It is preferable to select the secondary clearance angle $\theta_3$ between 30° and 40° and the most preferable angle is 35°.

One example of the router bit according to the present invention has the following characteristics:

Bit Diameter: 3/16 in. (4.76 mm), two-fluted bit;
Helix angle of the lower cutting edge: 30° (right hand helix)
Helix angle of the upper cutting edge: 30° (left hand helix)
Overlap length: 0.45 mm
Shank Diameter: 1/4 in. (6.35 mm)
Material: cemented carbide

An experiment was conducted to trim a plane composite material with the above router bit at 23000 rpm and a smooth cut face without fluff, burrs or delamination was obtained. Further it was confirmed that reliable drilling of the material was carried out with a router bit having a point angle $\theta$ of 135°.

The cutting speed with conventional bits as shown in Figures 6a to 6c is 500 mm/min at most, since the cutting speed cannot be increased because of low cutting ability. On the other hand, it is possible to increase the cutting speed to 3500 mm/min with the router bit of the present invention. In addition, the durability of the bit may be increased by properly selecting the cutting edge angles $\theta_1$, $\theta_2$, and $\theta_3$. Durability of the router bit according to the present invention is about six times as long as a conventional bit.

Figure 7 shows another embodiment of the present invention. Although the illustrated router bit is a four-fluted bit, the present invention is not of course limited to such a bit. In the drawings, the same parts as the router bit of Figure 1 are identified by the same references. The router bit has suitable axial rake angle $\theta_1$, primary relief angle $\theta_2$ and secondary clearance angle $\theta_3$. The helix angle $\alpha$ of the lower cutting edge 3, having a right-handed helix, is different from the helix angle $\beta$ of the upper cutting edge 4, which has a left-handed helix. For example, the angle $\alpha$ is about 45° and $\beta$ is about 10°. In the overlap range, one of the lower cutting edges 3a is longer than the other 3b, and the upper cutting edge 4a is longer than the cutting edge 4b, but the ends of these cutting edges are equiangularly disposed in cross section.

The composite material shown in Figure 8 has a convex shape and is positioned on a lower form 22 set on a table 24 and an upper form 23 is put on the material 21. The material is clamped by a clamp using pins 26 inserted into holes 25 in the same manner as the previous embodiment.

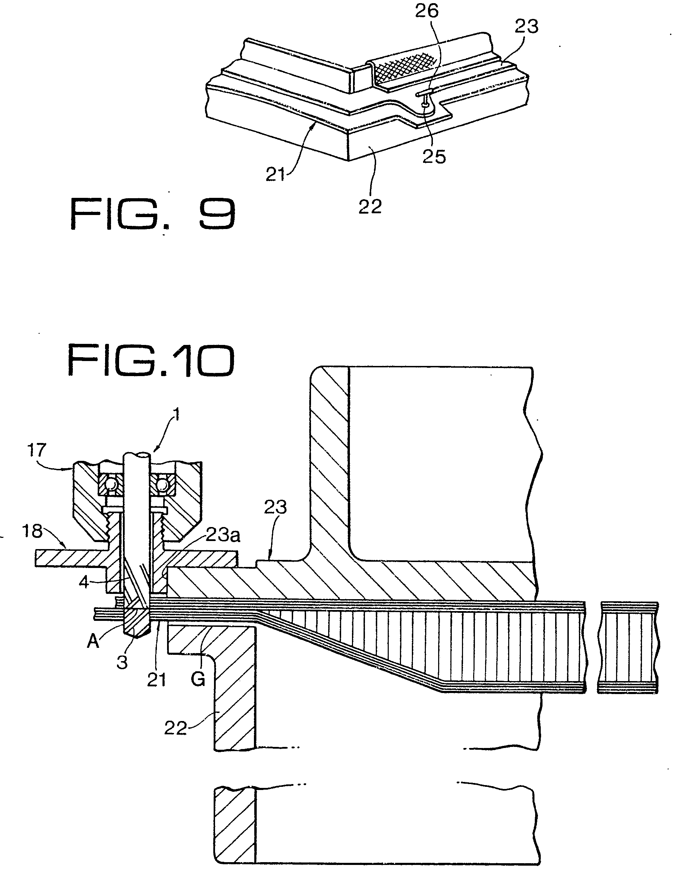

Figure 10 shows a composite material used for an aircraft which has a complex curvature in section and includes a honeycomb core. The upper form 23 can be exactly formed into the shape of the composite material to be trimmed from a master model. However, it is difficult to form the lower form 22 into the underside shape of the material including the honeycomb core. Accordingly, a gap G is inevitably left between the material 21 and the lower form 22 as shown in Figure 10. Therefore, when the material is trimmed with a conventional end mill or bit, the material vibrates badly because of the gap G, which causes delamination of the material and serious burring.

In using the router bit of the second embodiment, since the helix angle $\alpha$ of the lower cutting edge 3 is greater than the angle $\beta$ of the upper cutting edge 4, the composite material 21 is drawn up and pressed against the upper form 23 and held in such a condition. Thus, the composite material can be trimmed with the router bit without vibration and delamination.

Since double cutting edges are provided in the overlap range as compared with upper or lower cutting edges, burrs aggregated about the standard point A may be perfectly cut off to provide a smooth cut face.

It is preferable to select the helix angle to be less than 1/3 of the helix angle $\alpha$. The axial rake angle $\theta_1$ (positive) of the router bit of Figure 7 is preferable between 15° and 25°, and 20° is the most preferable. Preferably the primary relief angle $\theta_2$ is between 10° and 20°, and 15° is the most preferable. The secondary clearance angle $\theta_3$ is selected to be between 20° and 30° and the most preferable angle is 25°.

An example of the router bit of the second embodiment has the bit diameter of 1/4 in. (6.35 mm, four-fluted bit), cutting edge angle $\alpha$ of 45° and cutting edge angle $\beta$ of 10°.

Although the composite material 21 in the example of Figure 8 has an upper surface as a standard surface, a composite material having an underside as a standard surface may be trimmed by another router bit having an upper cutting edge of a large helix angle and a lower cutting edge of a small helix angle $\alpha$. Thus, the material can be pressed against a lower standard form and trimmed in the same manner as the above described example.

**Claims**

1. A router bit comprising a shank and a fluted portion, said fluted portion comprising at least two upper cutting edges above a predetermined standard point and at least two lower cuttinge edges below said standard point, the helixes of said upper and lower cutting edges being twisted in mutually opposite directions.

2. A router bit according to claim 1 wherein said upper and lower cutting edges overlap in the region of said standard point.

3. A router bit according to any preceding claim further comprising cutting edges provided on the point of said bit for drilling a material.

4. A router bit according to any preceding claim wherein at least one of said upper cutting edges and at least one of said lower cutting edges are of different length from the other cutting edges and the ends of cutting edges in the overlapping range are equiangularly disposed.

5. A router bit according to any preceding claim wherein the helixes of said upper and lower cutting edges are equal in absolute angle.

6. A router bit according to any of claims 1 to 4 wherein the helixes of said upper and lower cutting edges are different in absolute angle.

7. A router bit according to any of claims 1 to 4 wherein each of said cutting edges has an axial rake angle between 10° and 25°, a primary relief angle between 10° and 20° and a secondary clearance angle between 20° and 40°.

### Patentansprüche

1. Schneideneinsatz für eine Vorlageschneidemaschine, mit einem Schaft und einem gerillten Abschnitt, der wenigstens zwei obere Schneidkanten oberhalb eines vorstimmten Bezugspunktes und wenigstens zwei untere Schneidkanten unterhalb des Bezugspunktes aufweist, wobei die oberen und unteren Schneidkanten sprialförmig in einander entgegengesetzte Richtungen gewunden sind.

2. Schneideneinsatz nach Anspruch 1, bei dem sich die oberen und unteren Schneidkanten im Bereich des Bezugspunktes überlappen.

3. Schneideneinsatz nach einem der vorstehenden Ansprüche mit an der Spitze der Bohrschneide zum Bohren eines Materials zusätzlich vorgesehenen Schneidkanten.

4. Schneideneinsatz nach mindestens einem der vorstehenden Ansprüche, bei dem wenigstens eine der oberen Schneidkanten und wenigstens eine der unteren Schneidkanten eine andere Länge als die anderen Schneidkanten aufweisen und bei aufweisen und bie dem die Enden der Schneidkanten in dem überlappenden Bereich gleichwinklig angeordnet sind.

5. Schneideneinsatz nach einem der vorstehenden Ansprüche, bei dem die Spirallinien der oberen und unteren Schneidkanten einen betragsmäßig gleichen Winkel aufweisen.

6. Schneideneinsatz nach einem der Ansprüche 1 bis 4, bei dem die Spirallinien der oberen und unteren Schneidkanten betragsmäßig unterschiedliche Winkel aufweisen.

7. Schneidensatz nach einem der Ansprüche 1 bis 4, bei dem jedge Schneidkante einen axialen Neigungswinkel zwischen 10° und 25°, einen primären Hinterdrehwinkel zwischen 10° und 20° und einen sekundären Freiwinkel zwischen 20° und 40° aufweist.

### Revendications

1. Fraise de perçage qui comprend un corps et une partie cannelée, ladite partie cannelée comprenant, au moins, deux tranchants supérieurs situés au-dessus d'un point de référence prédéterminé, et, au moins, deux tranchants inférieurs situés au-dessous dudit point de référence, les hélices desdits tranchants supérieurs et inférieurs tournant suivant des directions mutuellement opposées.

2. Fraise de perçage selon la revendication 1, caractérisé en ce que lesdits tranchants supérieurs et inférieurs se recouvrent dans la région dudit point de référence.

3. Fraise de perçage selon l'une quelconque des revendications précédentes, caractérisée en ce qu'il comprend des tranchants situés sur la pointe de ladite fraise, afin de percer une matière.

4. Fraise de perçage selon l'une quelconque des revendications précédentes, caractérisé en ce que l'un, au moins, desdits tranchants supérieurs et l'une, au moins, desdits tranchants inférieurs a une longueur différente de celle des autres tranchants et en ce que, dans la région de recouvrement, les extrémités des tranchants sont équiangulairement disposées.

5. Fraise de perçage selon l'une quelconque des revendications précédentes, caractérisée en ce que les hélices desdits tranchants supérieurs et inférieurs ont des angles absolus égaux.

6. Fraise de perçage selon l'une quelconque des revendications 1 à 4, caractérisée en ce que les hélices desdits tranchants supérieurs et inférieurs ont des angles absolus différents.

7. Fraise de perçage selon l'une quelconque des revendications 1 à 4, caractérisé en ce que lesdits tranchants ont un angle d'attaque ou d'affûtage compris entre 10° et 25°, un angle de dépouille primaire compris entre 10° et 20° et un angle de dépouille secondaire compris entre 20° et 40°.

FIG. 1

FIG. 3

# FIG. 2

$\theta_1$

4

$\theta_2$

$\theta_3$

13

16

11

# FIG. 4

# FIG. 5

1

17

18

13a

13

4

11

A

3

$\delta$

FIG. 6a

FIG. 6b

FIG. 6c

FIG. 7

FIG. 8

FIG. 9

FIG.10